# EUROPÄISCHE PATENTSCHRIFT

(11) **EP 1 704 069 B1**
(45) Veröffentlichungstag und Bekanntmachung des Hinweises auf die Patenterteilung: **19.03.2008**
(21) Anmeldenummer: 04803443.3
(22) Anmeldetag: 02.12.2004
(51) Int. Cl.: B60N 2/36

(54) **VERRIEGELUNGSVORRICHTUNG FÜR EINEN FAHRZEUGSITZ**
LOCKING DEVICE FOR A VEHICLE SEAT
DISPOSITIF DE VERROUILLAGE DE SIEGE DE VEHICULE

(30) Priorität: 15.01.2004 DE 102004002358
(43) Veröffentlichungstag der Anmeldung: 27.09.2006
(73) Patentinhaber: KEIPER GmbH & Co. KG, 67657 Kaiserslautern (DE)
(72) Erfinder: BÄUMCHEN, Carsten, 66649 Oberthal (DE); WINDECKER, Volker, 67729 Sippersfeld (DE); CHRISTOFFEL, Thomas, 66909 Herschweiler-Pettersheim (DE)
(74) Vertreter: Patentanwälte Hosenthien-Held und Dr. Held
(86) Internationale Anmeldenummer: PCT/EP2004/013700
(87) Internationale Veröffentlichungsnummer: WO 2005/068248

(56) Entgegenhaltungen:
- EP-A- 1 279 552
- WO-A-20/05037596
- DE-A1- 3 404 508
- DE-A1- 10 057 776
- DE-A1- 10 115 667
- DE-A1- 10 156 200
- DE-A1- 10 202 344
- FR-A- 2 828 148
- FR-A- 2 828 149
- FR-A- 2 848 929
- US-A- 4 711 493

## Beschreibung

Die Erfindung betrifft eine Verriegelungsvorrichtung, insbesondere für einen Fahrzeugsitz, mit den Merkmalen des Oberbegriffs des Anspruches 1.

Eine solche Vorrichtung ist aus DE-A- 101 15 667 bekannt.

Bei der bekannten Verriegelungsvorrichtung sind innerhalb eines weitgehend geschlossenen, metallischen Gehäuses die Klinke und zwei Sicherungselemente angeordnet. Das Gehäuse wird an einem Strukturteil des Fahrzeugsitzes oder des Kraftfahrzeuges befestigt und durch eine an der Außenseite der Grundplatte aufgeclipste Blende aus Kunststoff abgedeckt.

Der Erfindung liegt die Aufgabe zu Grunde, eine Verriegelungsvorrichtung der eingangs genannten Art zu verbessern. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Dadurch, daß das Gehäuse wenigstens ein Einlegeteil aus einem höherfesten Material aufweist und daß wenigstens eines der Lagerelemente und das Einlegeteil zusammengefügt und wenigstens teilweise von einem weicheren Material unter Bildung des Gehäuses ummantelt sind, können zum einen von den Lagerelementen und dem Einlegeteil im Crashfall hohe Kräfte aufgenommen und weitergeleitet werden, während die Verwendung des weicheren Materials in der Regel das Gewicht des Gehäuses und damit der gesamten Verriegelungsvorrichtung reduziert. Zum anderen wird durch die Ummantelung der lastaufnehmenden Bauteile eine Transportsicherung geschaffen, welche eine exakte Relativpositionierung bis zur Befestigung an einem Strukturteil sicherstellt.

Während als höherfestes Material vorzugsweise Stahl gewählt wird, ist das weichere Material vorzugsweise Kunststoff, was neben der Gewichtsersparnis den Vorteil bringt, daß das Gehäuse auch bei einer komplexeren Struktur einfach herzustellen ist. Zur Verkürzung des Herstellungsverfahrens werden das Lagerelement und das Einlegeteil vorzugsweise im Spritzgußwerkzeug zusammengefügt und dann mit dem Kunststoff ummantelt. Außer diesem Umspritzen des höherfesten Materials mit dem weicheren Material sind noch andere Möglichkeiten des Ummantelns denkbar, bei denen sich eine feste, großflächige Verbindung zwischen dem höherfesten Material und dem weicheren Material ergibt, beispielsweise ein Beschichten durch Eintauchen von Einlegeteil und Lagerelement in eine Schmelze oder Lösung des weicheren Materials.

Um den Kraftfluß zwischen dem Lagerelement und dem Einlegeteil oder umgekehrt möglichst günstig zu gestalten und die Gehäusebereiche aus dem weicheren Material außerhalb des Kraftflusses zu halten, wirken das Lagerelement und das Einlegeteil vorzugsweise formschlüssig zusammen, beispielsweise indem das Lagerelement in eine Öffnung des Einlegeteils gesteckt ist und das Lagerelement vorzugsweise in direktem Kontakt mit dem Einlegeteil steht.

Um ein gesondertes Schmieren der Lagerstelle der Klinke und/oder des Sicherungselementes zu vermeiden, ist das Lagerelement vorzugsweise auch auf dem zur Lagerung der Klinke und/oder des Sicherungselementes dienenden Lagerabschnitt vom weicheren Material ummantelt, d.h. das weichere Material bildet das Schmiermittel und sorgt für einen Toleranzausgleich.

In bevorzugter Ausführung ist das Gehäuse halboffen ausgebildet, und ein Strukturteil, an dem die Verriegelungsvorrichtung zu befestigen ist, schließt das Gehäuse. Dadurch muß kein gesonderter Deckel vorgesehen werden, was Material, Gewicht und Bauraum spart, insbesondere unnötige Materialdopplungen vermeidet. Die vorzugsweise bereits für den Normalgebrauch funktionsfähige und prüffähige, zu einer Seite hin offene Verriegelungsvorrichtung erhält durch die Anbringung an dem Strukturteil ihre volle Festigkeit, insbesondere im Hinblick auf die Belastungen im Crashfall. Zugleich werden die Bauteile innerhalb der Verriegelungsvorrichtung durch das Schließen des Gehäuses vor Beschädigungen und Verschmutzungen geschützt. Die Befestigung am Strukturteil erfolgt beispielsweise mittels Schrauben, welche zur Bauraumersparnis von den vorzugsweise hohl ausgebildeten Lagerelementen aufgenommen werden.

Bei einer Verriegelungsvorrichtung mit erhöhter Verriegelungssicherheit und erhöhter Belastbarkeit im Crashfall sind ein Spannexzenter und ein Fangstück als Sicherungselemente vorgesehen, wobei der federbelastete Spannexzenter im verriegelten Zustand die Klinke mit einem schließenden Moment beaufschlagt und das Fangstück im Crashfall die Klinke abstützt.

Die erfindungsgemäße Verriegelungsvorrichtung kann an verschiedenen Stellen eines Fahrzeugsitzes verwendet werden, beispielsweise zur Bodenanbindung des gesamten Fahrzeugsitzes oder als Lehnenschloß zur Befestigung der Lehne an der Fahrzeugstruktur, wobei die Verriegelungsvorrichtung an einem sitzstrukturfesten oder einem fahrzeugstrukturfesten Strukturteil angebracht und das Gegenelement entsprechend fahrzeugstrukturfest oder sitzstrukturfest ist. Die Verriegelungsvorrichtung kann auch in einen Gelenkbeschlag integriert sein, der zur Neigungseinstellung der Lehne vorgesehen ist, insbesondere wenn eines der Beschlagteile als Hohlkasten auszubilden ist.

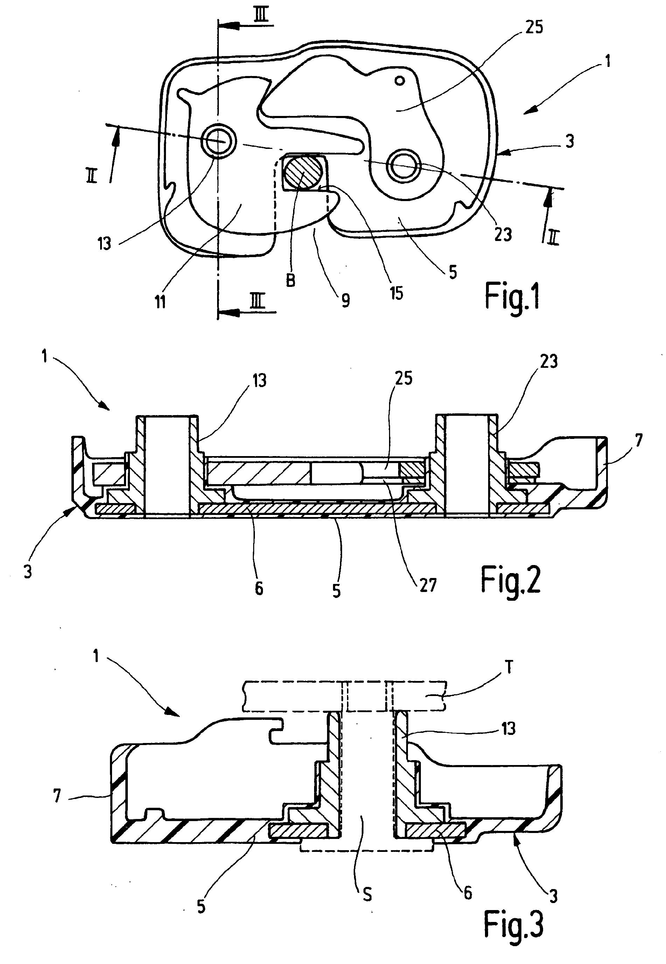

Im folgenden ist die Erfindung anhand eines in der Zeichnung dargestellten Ausführungsbeispiels und einer Abwandlung hierzu näher erläutert. Es zeigen
- Fig. 1: eine Ansicht des Ausführungsbeispiels ohne Federn,
- Fig. 2: einen Schnitt entlang der Linie II-II in Fig. 1, und
- Fig. 3: einen Schnitt entlang der Linie III-III in Fig. 1.

Eine Verriegelungsvorrichtung 1 ist zur lösbaren Verbindung einer Lehne eines Fahrzeugsitzes mit der Fahrzeugstruktur eines Kraftfahrzeuges vorgesehen, könnte aber auch zur Bodenanbindung eines Fahrzeugsitzes oder als Motorhauben- oder Heckklappenschloß eingesetzt werden. Die Verriegelungsvorrichtung 1 weist ein halboffenes Gehäuse 3 aus Kunststoff mit einer Grundplatte 5 auf, welche vertikal und in Fahrtrichtung ausgerichtet ist und die nachfolgend verwendeten Richtungsangaben definiert. In der Grundplatte 5 ist ein Einlegeteil 6 aus Stahl oder einem anderen, gegenüber dem Kunststoff höherfesten Material vorgesehen, welches in die Grundplatte 5 eingespritzt ist. Die Randbereiche der Grundplatte 5 gehen einstückig in eine senkrecht zur Grundplatte 5 abstehende, diese nahezu vollständig umschließende Seitenwand 7 über. An einer Längsseite des Gehäuses 3 ist eine von der Seitenwand 7 freie Bolzenaufnahme 9 ausgebildet, welche sich nach außen öffnet und der Aufnahme eines fahrzeugstrukturfesten Bolzens B oder eines anderen Gegenelementes dient. Dabei ist die Breite der Bolzenaufnahme 9 für einen Toleranzausgleich größer als der Durchmesser des Bolzens B. Das Gegenelement kann auch ein Abschnitt eines Bügels sein.

Eine Klinke 11 ist auf einem von der Grundplatte 5 parallel zur Seitenwand 7 abstehenden ersten Lagerelement 13 schwenkbar gelagert, welches als ein gestufter, hohler Bolzen ausgebildet ist. Die Klinke 11 weist zum Zusammenwirken mit dem Bolzen B ein Hakenmaul 15 auf, welches in einem verriegelten Zustand der Verriegelungsvorrichtung 1 die Bolzenaufnahme 9 wenigstens näherungsweise senkrecht kreuzt und verschließt, während es in einem geöffneten Zustand die Bolzenaufnahme 9 öffnet. Eine nicht näher dargestellte Feder spannt die Klinke 11 in Schließrichtung vor.

Beabstandet zum ersten Lagerelement 13 ist ein prinzipiell gleich ausgebildetes zweites Lagerelement 23 am Gehäuse 3 angeordnet. Auf dem zweiten Lagerelement 23 ist ein Fangstück 25 schwenkbar gelagert, welches mittels einer weiteren, ebenfalls nicht dargestellten Feder in Richtung auf die Klinke 11 vorgespannt ist. Benachbart zum Fangstück 25 ist ein Spannexzenter 27 auf dem zweiten Lagerelement 23 gelagert, welcher von einer dritten, ebenfalls nicht dargestellte Feder vorgespannt die Klinke 11 im verriegelten Zustand mit einem schließenden Moment beaufschlagt und dadurch in Eingriff mit dem Bolzen B hält.

Im Normalfall ist das Fangstück 25 beabstandet zur Klinke 11 angeordnet. Im Crashfall, wenn die Klinke 11 ein öffnendes Moment erfährt und den Spannexzenter 27 wegdrückt, gelangt die Klinke 11 in Anlage an das Fangstück 25, welches die Klinke 11 abstützt und ein Öffnen derselben verhindert. Zum Entriegeln der Verriegelungsvorrichtung 1 wird in an sich bekannter Weise, beispielsweise über einen angeformten Entriegelungsbolzen, einen Hebel oder einen Bowdenzug, das Fangstück 25 von der Klinke 11 weggeschwenkt, wobei es über einen angeformten Mitnehmer, gegebenenfalls nach einem kleinen Leerhub, den Spannexzenter 27 mitnimmt. Die Klinke 11 wird dann nicht länger gesichert, sondern aufgezogen und im entriegelten Zustand vom Fangstück 25 aufgehalten. Der Spannexzenter 27 und das Fangstück 25 sind somit Sicherungselemente für die Klinke 11 sowohl im verriegelten als auch im geöffneten Zustand.

Zur Herstellung des Gehäuses 3 werden zunächst die beiden Lagerelemente 13 und 23 und das Einlegeteil 6 dem Spritzgußwerkzeug automatisch zugeführt und innerhalb desselben die beiden Lagerelemente 13 und 23 in passende Öffnungen des Einlegeteils 6 gesteckt, gegebenenfalls eingepresst, oder anderweitig zusammengefügt. Sodann werden diese Einzelteile wenigstens teilweise mit einer oder mehreren Kunststoffkomponenten ummantelt, welche nach dem Erstarren zum Gehäuse 3 für eine formschlüssige Verbindung dieser Einzelteile sorgen. Der Kraftfluß zwischen den Lagerelementen 13 und 23 und dem Einlegeteil 6 erfolgt direkt, so daß die Kunststoffbereiche des Gehäuses 3 vorrangig eine Abdeckfunktion erfüllen. Bei einer geeigneten Materialwahl besteht durch die Kunstoffummantelung der Lagerelemente 13 und 23 auf deren Lagerabschnitten für die Sicherungselemente die Möglichkeit, diese Lagerstellen - und damit die gesamte Verriegelungsvorrichtung 1 - fettfrei zu lassen, was die Verschmutzung stark reduziert.

Mit den vorstehend beschriebenen Bauteilen hat die Verriegelungsvorrichtung 1 für den Normalgebrauch bereits ihre Funktionsfähigkeit, bildet also eine prüffähige Einheit, auch wenn das Gehäuse 3 noch offen ist. Die Verriegelungsvorrichtung 1 wird an einem Strukturteil T, beispielsweise einem Lehnenholm, mittels Schrauben S befestigt, welche die Lagerelemente 13 und 23 durchdringen, wobei das Strukturteil T an den Stirnseiten der Lagerelemente 13 und 23 anliegt. Aufgrund dieser Verstärkung der Lagerstellen und des näherungsweise Schließens des Gehäuses 3 durch das Strukturteil T wird die volle Festigkeit der Verriegelungsvorrichtung für den Crashfall erreicht.

### Bezugszeichenliste

- 1: Verriegelungsvorrichtung
- 3: Gehäuse
- 5: Grundplatte
- 6: Einlegeteil
- 7: Seitenwand
- 9: Bolzenaufnahme
- 11: Klinke
- 13: erstes Lagerelement
- 15: Hakenmaul
- 23: zweites Lagerelement
- 25: Fangstück
- 27: Spannexzenter
- B: Bolzen, Gegenelement
- S: Schraube
- T: Strukturteil

## Patentansprüche

1. Verriegelungsvorrichtung, insbesondere für einen Fahrzeugsitz, mit einem Gehäuse (3), einer im Gehäuse (3) angeordneten, auf einem ersten Lagerelement (13) schwenkbar gelagerten Klinke (11) zum Verriegeln mit einem Gegenelement (B) und wenigstens einem ebenfalls im Gehäuse (3) angeordneten, auf einem zweiten Lagerelement (23) schwenkbar gelagerten Sicherungselement (25, 27), welches durch Zusammenwirken mit der Klinke (11) einen verriegelten Zustand sichert, **dadurch gekennzeichnet, daß** das Gehäuse (3) wenigstens ein Einlegeteil (6) aus einem höherfesten Material aufweist und daß wenigstens eines der Lagerelemente (13, 23) und das Einlegeteil (6) zusammengefügt und wenigstens teilweise von einem weicheren Material unter Bildung des Gehäuses (3) ummantelt sind.

2. Verriegelungsvorrichtung nach Anspruch 1, **dadurch gekennzeichnet, daß** das höherfeste Material Stahl ist.

3. Verriegelungsvorrichtung nach Anspruch 1 oder 2, **dadurch gekennzeichnet, daß** das weichere Material Kunststoff ist.

4. Verriegelungsvorrichtung nach Anspruch 3, **dadurch gekennzeichnet, daß** das Lagerelement (13, 23) und das Einlegeteil (6) im Spritzgußwerkzeug zusammengefügt und dann mit dem Kunststoff ummantelt sind.

5. Verriegelungsvorrichtung nach einem der Ansprüche 1 bis 4, **dadurch gekennzeichnet, daß** das Lagerelement (13, 23) formschlüssig mit dem Einlegeteil (6) zusammenwirkt.

6. Verriegelungsvorrichtung nach einem der Ansprüche 1 bis 5, **dadurch gekennzeichnet, daß** das Lagerelement (13, 23) in direktem Kontakt mit dem Einlegeteil (6) steht.

7. Verriegelungsvorrichtung nach einem der Ansprüche 1 bis 6, **dadurch gekennzeichnet, daß** das Lagerelement (13, 23) auch auf dem zur Lagerung der Klinke (11) und/oder des Sicherungselementes (25, 27) dienenden Lagerabschnitt vom weicheren Material ummantelt ist.

8. Verriegelungsvorrichtung nach einem der Ansprüche 1 bis 7, **dadurch gekennzeichnet, daß** das Gehäuse (3) halboffen ausgebildet ist und ein Strukturteil (T), an dem die Verriegelungsvorrichtung (1) zu befestigen ist, das Gehäuse (3) näherungsweise schließt.

9. Verriegelungsvorrichtung nach Anspruch 8, **dadurch gekennzeichnet, daß** das Lagerelement (13, 23) hohl ausgebildet ist und eine Schraube (S) zur Befestigung der Verriegelungsvorrichtung (1) an dem Strukturteil (T) aufnimmt.

10. Verriegelungsvorrichtung nach einem der Ansprüche 1 bis 9, **dadurch gekennzeichnet, daß** ein Spannexzenter (27) und ein Fangstück (25) als Sicherungselemente (25, 27) vorgesehen sind, wobei der federbelastete Spannexzenter (27) im verriegelten Zustand die Klinke (11) mit einem schließenden Moment beaufschlagt und das Fangstück (25) im Crashfall die Klinke (11) abstützt.

## Claims

1. A locking device, in particular for a vehicle seat, with a housing (3), a latch (11) which is arranged in the housing (3), is mounted pivotably on a first bearing element (13) and is intended for locking with a mating element (B), and at least one securing element (25, 27) which is likewise arranged in the housing (3), is mounted pivotably on a second bearing element (23) and secures a locked state by interaction with the latch (11), **characterized in that** the housing (3) has at least one insert (6) of a higher strength material, and **in that** at least one of the bearing elements (13, 23) and the insert (6) are joined together and are at least partially encased by a softer material, forming the housing (3).

2. The locking device as claimed in claim 1, **characterized in that** the higher strength material is steel.

3. The locking device as claimed in claim 1 or 2, **characterized in that** the soft material is plastic.

4. The locking device as claimed in claim 3, **characterized in that** the bearing element (13, 23) and the insert (6) are joined together in the injection mold and are then encased with the plastic.

5. The locking device as claimed in one of claims 1 to 4, **characterized in that** the bearing element (13, 23) interacts in an interlocking manner with the insert (6).

6. The locking device as claimed in one of claims 1 to 5, **characterized in that** the bearing element (13, 23) is in direct contact with the insert (6).

7. The locking device as claimed in one of claims 1 to 6, **characterized in that** the bearing element (13, 23) is encased by the softer material also on the bearing section serving for the mounting of the latch (11) and/or of the securing element (25, 27).

8. The locking device as claimed in one of claims 1 to 7, **characterized in that** the housing (3) is designed such that it is half open and a structural part (T) to which the locking device (1) is to be fastened approximately closes the housing (3).

9. The locking device as claimed in claim 8, **characterized in that** the bearing element (13, 23) is of hollow design and receives a screw (S) for fastening the locking device (1) to the structural part (T).

10. The locking device as claimed in one of claims 1 to 9, **characterized in that** a clamping eccentric (27) and an intercepting piece (25) are provided as securing elements (25, 27), the spring-loaded clamping eccentric (27) acting upon the latch (11) with a closing moment in the blocked state, and the intercepting piece (25) supporting the latch (11) in the event of a crash.

## Revendications

1. - Dispositif de verrouillage, en particulier pour un siège de véhicule, comportant un boîtier (3), un cliquet (11) disposé dans le boîtier (3), monté pivotant sur un premier élément de palier (13), pour le verrouillage avec un contre-élément (B) et au moins un élément de sécurité (25, 27) disposé également dans le boîtier (3), monté pivotant sur un deuxième élément de palier (23), lequel élément de sécurité assure un état verrouillé par coopération avec le cliquet (11), **caractérisé par le fait que** le boîtier (3) présente au moins une partie d'insertion (6) en une matière de plus haute résistance et qu'au moins l'un des éléments de palier (13, 23) et la partie d'insertion (6) sont assemblés et sont au moins partiellement munis d'un revêtement d'une matière plus souple avec formation du boîtier (3).

2. - Dispositif de verrouillage selon la revendication 1, **caractérisé par le fait que** la matière de plus haute résistance est l'acier.

3. - Dispositif de verrouillage selon l'une des revendications 1 ou 2, **caractérisé par le fait que** la matière plus souple est une matière plastique.

4. - Dispositif de verrouillage selon la revendication 3, **caractérisé par le fait que** l'élément de palier (13, 23) et l'élément d'insertion (6) sont assemblés dans un moule pour injection puis sont revêtus par la matière plastique.

5. - Dispositif de verrouillage selon l'une des revendications 1 à 4, **caractérisé par le fait que** l'élément de palier (13, 23) coopère à engagement positif avec la partie d'insertion (6).

6. - Dispositif de verrouillage selon l'une des revendications 1 à 5, **caractérisé par le fait que** l'élément de palier (13, 23) se trouve en contact direct avec l'élément d'insertion (6).

7. - Dispositif de verrouillage selon l'une des revendications 1 à 6, **caractérisé par le fait que** l'élément de palier (13, 23) est également revêtu par une matière plus souple sur la section de palier servant au logement du cliquet (11) et/ou de l'élément de sécurité (25, 27).

8. - Dispositif de verrouillage selon l'une des revendications 1 à 7, **caractérisé par le fait que** le boîtier (3) est réalisé semi-ouvert et une partie de structure (T) sur laquelle le dispositif de verrouillage (1) doit être fixé ferme approximativement le boîtier (3).

9. - Dispositif de verrouillage selon la revendication (8), **caractérisé par le fait que** l'élément de palier (13, 23) est réalisé creux et reçoit une vis (S) pour la fixation du dispositif de verrouillage (1) sur la partie de structure (T).

10. - Dispositif de verrouillage selon l'une des revendications 1 à 9, **caractérisé par le fait qu'**un excentrique de serrage (27) et une pièce d'arrêt (25) sont prévus comme éléments de sécurité (25, 27), à l'occasion de quoi l'excentrique de serrage (27) chargé par ressort dans l'état verrouillé sollicite le cliquet (11) avec un moment de fermeture et la pièce d'arrêt (25) supporte le cliquet (11) en cas d'accident.
